# EUROPEAN PATENT APPLICATION

(11) **EP 4 825 473 A1**
(43) Date of publication of application: **21.10.2026**
(21) Application number: 24904304.3
(22) Date of filing: 16.12.2024
(51) Int. Cl.: B01D 53/62, B01D 53/73, B01D 53/78, B01D 53/79, B01D 53/14, C01F 11/18, C01F 5/24

(54) **APPARATUS FOR CONTINUOUS MINERAL CARBONATION BASED ON DIRECT CARBONATION AND METHOD FOR CONTINUOUS MINERAL CARBONATION USING SAME**

(30) Priority: 15.12.2023 KR 20230183804
(71) Applicant: POSCO Holdings Inc., Pohang-si, Gyeongsangbuk-do 37859 (KR)
(72) Inventor: CHOI, Jeong-Ho, Pohang-si, Gyeongsangbuk-do 37877 (KR); AHN, Chi-Kyu, Pohang-si, Gyeongsangbuk-do 37877 (KR); KIM, Gook-Hee, Pohang-si, Gyeongsangbuk-do 37877 (KR); HWANG, Jong-Soo, Pohang-si, Gyeongsangbuk-do 37877 (KR); JEON, Nam-Gi, Pohang-si, Gyeongsangbuk-do 37877 (KR)
(74) Representative: Pfenning, Meinig & Partner mbB
(86) International application number: PCT/KR2024/020361
(87) International publication number: WO 2025/127739

(57) **Abstract**

The present invention relates to an apparatus for continuous mineral carbonation based on direct carbonation and a method for continuous mineral carbonation using same and, more specifically, to an apparatus for continuous mineral carbonation and a method for continuous mineral carbonation using same, wherein the apparatus comprises: an absorption tower that absorbs CO₂ from a CO₂-containing exhaust gas by means of an alkaline absorbent solution, discharges purified exhaust gas, and discharges a CO₂-containing absorbent solution; a slag feeding device that feeds industrial by-products containing calcium oxide (CaO) into a carbonization reactor; the carbonation reactor in which a carbonation reaction occurs between the CO₂-containing absorbent solution discharged from the absorption tower and the industrial by-products containing calcium oxide (CaO); and a conveying unit that continuously conveys, to a storage unit, a mixture discharged from the carbonization reactor.

## Description

### Technical Field

The present disclosure relates to an apparatus for continuous mineral carbonation and a method for mineral carbonation using the same, and more particularly, to an apparatus for continuous mineral carbonation based on direct carbonation for improving solubility of CO₂ by using an alkaline aqueous solution without performing a leaching process, thereby increasing energy efficiency, and a method for mineral carbonation using the same.

### Background Art

In general, mineral carbonation technology is a useful means of permanently storing CO₂ by reacting the alkaline earth metal component contained in minerals with CO₂ to produce thermodynamically more stable carbonate minerals.

The mineral carbonation may be divided into indirect carbonation for extracting alkaline cations and reacting with CO₂ and direct carbonation for directly reacting the alkaline industrial by-product with CO₂. More particularly, in indirect carbonation, the purpose is to extract effective components from slag by adding a basic or acidic solution thereto and then react with CO₂ to produce high purity CaCO₃, while in direct carbonation, the purpose is to treat the slag by fixing it through a reaction with CO₂. Although both methods are intended to produce CaCO₃ or MgCO₃, they are clearly distinguishable from each other in terms of processing CO₂ because the indirect carbonation must undergo a leaching process for obtaining high purity and energy efficiency decreases during this process.

The direct carbonation may reduce the cost of processing CO₂ in that it can react with CO₂ without a separate cation extraction process. For example, Korean Patent Application No. 10-2020-7008198 discloses a method for continuously producing solidified steelmaking slag and related devices, which is based on a direct carbonation reaction as a technique for cooling high-temperature slag and capturing and treating CO₂, corresponding to a gas-solid carbonation method in which CO₂ in a gaseous state is injected into high-temperature slag. However, such a reaction has a problem in that the reaction efficiency is significantly low. For example, at about 600°C, even if reacting for one hour or more, the ability to capture CO₂ is only about 88.5 g-CO₂/kg-slag, and when the temperature drops to room temperature level, even if reacting for six hours, it is possible to show only a CO₂ capture ability of 11.4 g-CO₂/kg-slag. In addition, since there are free CaO capable of additionally absorbing CO₂, the gas-solid carbonation method also has a problem in that it must necessarily go through a process of being piled up again and being carbonated in nature.

Accordingly, a gas/liquid reaction in an aqueous solution state may be an alternative. Meanwhile, since the CO₂ absorption amount is changed according to temperature, pressure, reaction rate and particle size of reactants in the gas-liquid direct carbonation, various types of reactors for controlling these factors have been proposed. Reactors such as autoclaves, batch reactors or slurry reactors are widely used to control temperature and pressure of mineral carbonation so as to absorb CO₂. However, because separation between solid and liquid after CO₂ reaction and drying processes are essential, it is difficult to continuously operate the process. Recently, rotating packed bed (RPB) reactors or ultrasonic reactors have also been suggested to improve mass transfer speed, but they have problems that scale-up of the process is difficult. Therefore, there is a need to develop a continuous process which can be scaled up while reacting with CO₂.

### Prior Art

### Patent Literature

Korean Patent Application No. 10-2020-7008198

### Disclosure of Invention

### Technical Problem

An aspect of the present disclosure is to provide an apparatus for continuous mineral carbonation based on direct carbonation in which solubility of CO₂ is improved by using an alkaline aqueous solution and energy efficiency is increased because no leaching process is required.

Another aspect of the present disclosure is to provide a method for continuous mineral carbonation capable of securing high CO₂ capture efficiency and scale up to large-scale processes using an apparatus for continuous mineral carbonation based on direct carbonation.

### Solution to Problem

According to an aspect of the present disclosure, an apparatus for continuous mineral carbonation includes an absorption tower that absorbs CO₂ from a CO₂-containing exhaust gas by means of an alkaline absorbent solution, discharges purified exhaust gas, and discharges a CO₂-containing absorbent solution; a slag feeding device that feeds industrial by-products containing calcium oxide (CaO) into a carbonization reactor; the carbonization reactor in which a carbonation reaction occurs between the CO₂-containing absorbent solution discharged from the absorption tower and the industrial by-products containing calcium oxide (CaO); and a conveying unit that continuously conveys, to a storage unit, a mixture discharged from the carbonization reactor.

According to another aspect of the present disclosure, a method for continuous mineral carbonation using an apparatus for continuous mineral carbonation of the present disclosure includes: absorbing CO₂ from CO₂-containing exhaust gas using an alkaline absorbent solution to discharge purified exhaust gas and preparing a CO₂-containing absorbent solution; performing carbonation reaction by mixing the CO₂-containing absorbent solution with industrial by-products including calcium oxide (CaO); and continuously conveying and storing a mixture discharged as a result of the carbonation reaction.

### Advantageous Effects of Invention

According to an aspect of the present disclosure, the liquid-solid carbonation method can secure high CO₂ capture efficiency within a short time based on direct carbonation and such difference in CO₂ capture performance is more pronounced when actually stockpiling. That is, according to the present disclosure, aging time at a stockpile using mineral carbonation reaction may be shortened to several hours or less and since there is no need to stockpile slag for a long period of time as described above, space efficiency of a slag stockpile may be improved and scale up to a commercial large-scale process is possible by using a screw reactor and a conveyor belt.

### Brief Description of Drawings

FIG. 1 is a schematical view showing a configuration of an exemplary CO₂ capture and continuous direct mineral carbonization reactor according to the present disclosure with a screw type (A) slag inlet 102 and conveying unit 400.
FIG. 2 is a schematical view showing a configuration of an exemplary CO₂ capture and continuous direct mineral carbonization reactor according to the present disclosure with a conveyor type (B) slag inlet 102 and conveying unit 400.
FIG. 3 is a graph showing the CO₂ absorption amount by slag according to particle size, where FIG. 3(a) shows the CO₂ absorption amount when 0.75 mol of NaHCO₃ is used, and FIG. 3(b) shows the CO₂ absorption amount when 1.00 mol of NaHCO₃ is used. In FIGS. 3(a) and 3(b), each experiment was performed using steelmaking slag.
FIG. 4 is a graph showing (a) changes in pH and (b) CO₂ absorption rate (%) over time during a continuous mineral carbonation reaction based on the direct carbonation using blast furnace slag.
FIG. 5 is a graph showing (a) changes in pH and (b) CO₂ absorption rate (%) over time during a continuous mineral carbonation reaction based on the direct carbonation using KR slag.
FIG. 6 is a graph showing the CO₂ absorption amount (gCO₂/kg slag) according to pH change based on particle size in a continuous mineral carbonation reaction based on the direct carbonation with KR slag.

### Best Mode for the Invention

Hereinafter, a preferred embodiment of the present disclosure will be described with reference to the accompanying drawings. However, the embodiments of the present disclosure may be modified in various other forms and are not limited to the following embodiments.

The present disclosure proposes a continuous direct carbonation apparatus and method.

Hereinafter, a mineral carbonation apparatus of the present disclosure will be described.

The apparatus for continuous mineral carbonation of the present disclosure includes an absorption tower that absorbs CO₂ from a CO₂-containing exhaust gas by means of an alkaline absorbent solution, discharges purified exhaust gas, and discharges a CO₂-containing absorbent solution; a slag feeding device that feeds industrial by-products containing calcium oxide (CaO) into a carbonization reactor; the carbonization reactor in which a carbonation reaction occurs between the CO₂-containing absorbent solution discharged from the absorption tower and the industrial by-products containing calcium oxide (CaO); and a conveying unit that continuously conveys, to a storage unit, a mixture discharged from the carbonization reactor.

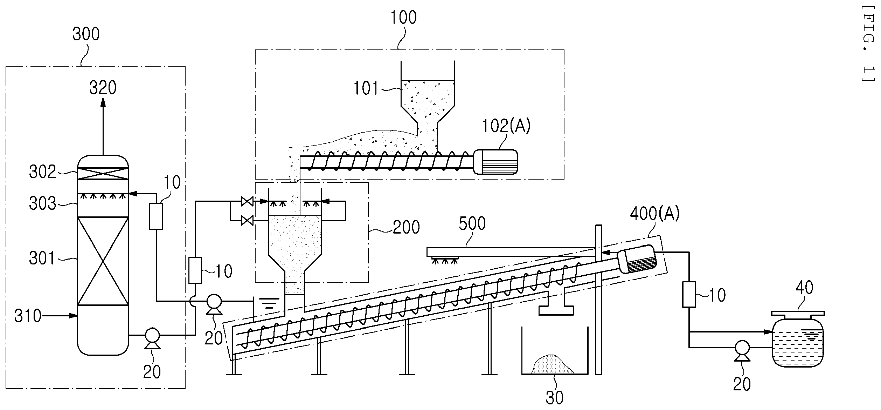

Referring to the apparatus for continuous mineral carbonation based on direct carbonation according to an exemplary embodiment of the present disclosure shown in FIG. 1, the present disclosure includes a slag feeding device 100 for feeding slag, a carbonization reactor 200 for performing carbonation reaction, an absorption unit 300 including an absorption tower 301 for improving solubility of liquid-phase CO₂ to promote carbonation reaction, and a conveying unit 400 for conveying carbonated slag.

Meanwhile, a part of the conveying unit may include a washing unit 500 in which a washing reaction using water may be performed, and the washing unit for washing the mixture discharged from the carbonization reactor carried by the conveying unit, and may be washed with water.

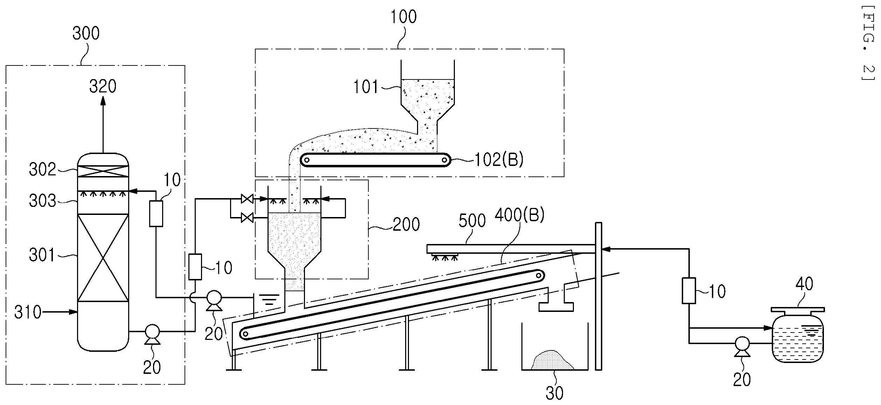

The slag feeding device 100 may include a hopper including an accommodation space for accommodating the industrial by-products containing calcium oxide, and a slag inlet provided at a lower end of the hopper to continuously feed the industrial by-products containing calcium oxide discharged from the hopper into the carbonization reactor, and for example, the slag inlet 102 may be configured in various forms such as a screw type (A) or a conveyor type (B) (FIG. 2), as a device that conveys slag filled in the hopper 101 to the upper part of the carbonization reactor 200. The slag feeding device is used for controlling the amount of slag injected into the upper portion of the carbonization reactor.

The carbonization reactor 200 may be configured as a batch type reactor, and the CO₂-containing absorbent solution, for example, an aqueous solution of NaHCO₃, may be injected from the upper portion to the lower portion of the carbonization reactor. Herein, the total reaction time can be controlled according to the liquid flow rate, and since the CO₂-containing absorbent solution moves along the surface of slag, mineral carbonation reaction occurs on the surface of slag. The carbonization reactor may be controlled so that powder is smoothly conveyed using a vibration pad or a striking device.

After the carbonization reactor may be formed in a batch type, and slurry is introduced into an upper portion of the reactor to fill the reactor, a solution in which CO₂ is dissolved may be sprayed into the upper part of the reactor, and at this time, the spraying method is not particularly limited, and various methods such as spray type, distributor, or the like may be applied.

The absorption tower 301 of the absorption unit 300 is a part for absorbing CO₂ by an acid-base reaction, in which an alkaline absorbent solution, for example an NaOH solution, is introduced from the upper part to the lower part, for example by spraying through a spray nozzle, and gas containing CO₂ moves from the lower part of the absorption tower 301 to an upper part and absorbs CO₂ through gas-liquid contact during this process, thereby discharging CO₂-free exhaust gas.

The conveying unit 400 may react with the CO₂-containing absorbent solution, for example, NaHCO₃ solution while the slag is conveyed so that an additional mineral carbonation reaction proceeds, thereby increasing a reaction time, and the slag for which the mineral carbonation has been completed may be recovered and utilized from a bucket 30 located at the lower end of the conveying unit. Herein, the conveying unit 400 may include a screw type (A) or a conveyor type (B) (FIG. 2).

In the conveying unit 400, a liquid phase may be discharged to a lower portion thereof and is not particularly limited in material but may have a mesh form such as Teflon mesh or stainless steel mesh. The discharged liquid phase may be reused in the CO₂ absorption unit through the pump 20. Alternatively, the discharged liquid phase may be collected by being collected in an H₂O tank (not shown).

Meanwhile, the solid supplied to the conveying unit 400 is not discharged downward and may be conveyed in a predetermined direction. For example, it may be conveyed to a slag bucket 30. Herein, the screw line of the conveying unit may be such that below an inlet (discharge port) which discharges downward, the screw line has a forward direction, but above the discharge port, the screw line has a reverse direction, and in this case, it is possible to prevent the solid from moving beyond the discharge port.

FIG. 1 is a schematic view showing an exemplary configuration of the CO₂ capture and continuous direct mineral carbonization reactor according to the present disclosure with a batch type reactor 200 in combination with a slag inlet 102 in screw type (A) and conveying unit 400, and FIG. 2 is a view showing a batch type reactor 200 in combination with a slag inlet 102 in a conveyor type (B) and conveying unit 400.

The alkaline absorbent solution is not particularly limited as long as it is an alkali suitable for absorbing acidic gas in the exhaust gas, and may be selected from sodium hydroxide (NaOH), potassium hydroxide (KOH), sodium carbonate (Na₂CO₃), potassium carbonate (K₂CO₃), or the like, and specifically may be sodium hydroxide. Hereinafter, a description will be given of an example where the alkali absorbent solution is sodium hydroxide absorption liquid. When the alkali absorbent solution is an aqueous sodium hydroxide (NaOH) solution, the CO₂-containing absorbent solution may be an aqueous sodium bicarbonate (NaHCO₃) solution.

The sodium hydroxide absorption liquid may remove carbon dioxide included in the exhaust gas by a carbonation reaction of Formula (1) below.

NaOH(aq) + CO₂(g) → NaHCO₃(aq) (1)

According to the above Formula (1), carbon dioxide can react with sodium hydroxide absorption liquid to form a salt in the form of sodium bicarbonate (NaHCO₃).

Meanwhile, since carbon dioxide has very low solubility in water (0.0329 mol/L @ 25°C), the solubility of carbon dioxide may be increased by using an alkaline absorbent solution such as a NaOH solution, thereby activating the mineral carbonation reaction.

More specifically, the reaction rate determining step in the mineral carbonation reaction is a speed at which CO₂ dissolves into water. For example, when NaOH reacts with CO₂ as an acidic gas to form a basic solution, the acid-base reaction is activated. When NaOH and CO₂ react with each other, CO₂ dissolves in liquid phase in the form of NaHCO₃ as shown by Formula 1 above, thereby increasing the amount of dissolved CO₂ in the liquid phase. The dissolved CO₂ may be reacted spontaneously with alkaline earth metals (CaO, MgO, etc.) to produce minerals such as CaCO₃ or MgCO₃, thus sequestering CO₂.

CaO(s) + H₂O(l) → Ca(OH)₂(s) (2)

Ca(OH)2 + 2 NaHCO₃(aq) → CaCO₃(s) + NaOH(aq) + H₂O(aq) (3)

The lower limit of the concentration of the alkaline absorbent solution is not particularly limited, but may be in a range from 0.1 M to 1.0 M, and more specifically, from 0.5 M to 0.8 M. When the concentration of the alkaline absorbent solution is less than the above-mentioned range, the amount of acidic gas absorbed by the alkaline absorbent solution decreases, and thus the circulation rate of the absorbent solution increases in order to absorb a large amount of acidic gas, which may cause the size of the mineral carbonation apparatus to become excessively large, and when the concentration exceeds the above-mentioned range, the amount of carbon dioxide dissolved as sodium bicarbonate or potassium bicarbonate increases and may precipitate in solid form, thereby causing problems such as clogging of the absorption tower.

Meanwhile, the slag feeding device of the present disclosure may include a slag inlet 102 for continuously feeding industrial by-products including calcium oxide to enable continuous carbonation reaction, and the shape of the slag inlet is not particularly limited and may be in the form of a conveyor belt or a screw type.

The conveying unit may control the moving speed to optimize a reaction for removing carbon dioxide or sulfur dioxide from industrial by-products and absorption liquid. For example, the convey rate may be controlled so that the carbonation reaction is performed within 30 minutes to 5 hours, preferably 1 hour to 3 hours.

The industrial by-product including calcium oxide is an industrial by-product generated in a steelmaking process and includes a large amount of calcium oxide (CaO) because it is generated during the removal of carbon, silicon, and sulfur components dissolved in molten iron and at high temperature.

The industrial by-product containing calcium oxide is not particularly limited and may be selected from the group consisting of at least one slag selected from a group including steelmaking slag, blast furnace slag, and KR slag; coal ash; fly ash; cement kiln dust; chlorine bypass system dust; and the like.

Meanwhile, the industrial by-product containing calcium oxide may have a particle size of 0.075 mm or less, for example, it may be greater than 0.001 mm and equal to or less than 0.6 mm, or equal to or less than 0.075 mm, preferably from 0.001 mm to 0.075 mm. When the industrial by-product containing calcium oxide has a particle size of 0.075 mm or less, the absorption amount and the absorption rate of CO₂ can be significantly improved.

When sodium hydroxide solution is used as the absorbent solution, in the carbonization reactor upper part of the sodium hydrogen carbonate (NaHCO₃), which is a product of Formula (1), reacts with calcium oxide contained in industrial by-products so that the carbonation reaction of Formula (3) occurs, and as a result, carbon dioxide precipitates in the form of calcium carbonate (CaCO₃) and may be stably stored, and since sodium hydroxide that initially introduced at the beginning of the reaction is regenerated, the regenerated alkaline absorbent solution may be discharged to the lower part of the carbonization reactor.

Meanwhile, the waste liquid discharged after carbonation reaction may be regenerated into an alkaline absorption solution.

The apparatus for continuous mineral carbonation of the present disclosure may further include a heat exchanger to control temperature in order to improve acid gas removal efficiency in the absorption tower 301.

The alkaline absorbent solution cooled in the heat exchanger and supplied to the absorption tower may have a temperature of 5 to 50 °C. When the temperature of the alkaline absorbent solution is less than 5°C, salts (NaHCO₃ and Na₂CO₃) dissolved in the absorbent solution may be precipitated, which causes clogging of pipes and packing material of the absorption tower, and when the temperature exceeds 50°C, the amount of carbon dioxide absorbed by the alkaline absorbent solution decreases and the absorbent solution evaporates, resulting in loss thereof.

The carbonization reactor 200 may include an absorbent solution injector that injects the acidic gas-containing absorbent solution, for example, a spray nozzle 303. The absorbent solution injector is connected to the outlet of the acid gas-containing absorbent solution in the absorption tower and serves to inject the acid gas-containing absorbent solution discharged from the absorption tower, and by spraying the acid gas-containing absorbent solution to the upper part of the industrial by-product containing calcium oxide supplied in advance to the upper part of the carbonization reactor, carbonation reaction or the like may be caused.

It is preferable that the acidic gas-containing absorbent solution be sprayed after being fed to the carbonization reactor from an industrial by-product containing calcium oxide.

The acidic gas-containing absorbent solution supplied as the industrial by-product is preferably supplied at an optimum temperature for carbonation reaction, and for this purpose the apparatus may further include a heat exchanger (not shown).

In addition, the system may further include a pH or conductivity controller (not shown) to control the pH and sodium hydroxide concentration of the acidic gas-containing absorbent solution.

The absorbent solution injector may be configured to control the amount of acidic gas-containing absorbent solution required for carbonation reaction or the like according to the amount of industrial by-products, and a control valve (not shown) or the like may be additionally provided in order to achieve this.

The process water may be a liquid capable of washing the alkaline absorbent solution remaining in the industrial by-product and is not particularly limited thereto but may be water (H₂O). The process water used for washing the industrial by-product may be discharged or recycled to the CO₂ capture process. More particularly, since gas including moisture is captured and evaporated during CO₂ capture, an amount of total water decreases, and thus the washing water may serve to wash and supplement the entire amount of water.

According to another aspect of the present disclosure, there is provided a method for continuous mineral carbonation using the apparatus using continuous mineral carbonation according to the present disclosure, wherein the method for continuous mineral carbonation includes the steps of: absorbing CO₂ from CO₂-containing exhaust gas using an alkaline absorbent solution to discharge purified exhaust gas and preparing a CO₂-containing absorbent solution; performing a carbonation reaction by mixing the CO₂-containing absorbent solution with industrial by-products including calcium oxide (CaO); and continuously conveying and storing a mixture discharged as a result of the carbonation reaction.

The above-described contents of the apparatus for continuous mineral carbonation according to the present disclosure are equally applied to the method for continuous mineral carbonation.

Hereinafter, the present disclosure will be described in more detail with reference to specific examples. The following Examples are provided for better understanding of the present disclosure and should not be construed as limiting the scope of the present disclosure.

### Mode for the Invention

### Embodiment

### 1. Manufacture of apparatus for continuous mineral carbonation based on direct carbonation

An exemplary apparatus for continuous mineral carbonation based on direct carbonation according to the present disclosure was manufactured as shown in FIG. 1. Specifically, the apparatus includes a slag feeding device 100 for feeding slag, a carbonization reactor 200 for performing a carbonation reaction, an absorption unit 300 including an absorption tower 301 for improving the solubility of liquid-phase CO₂ to promote the carbonation reaction, and a conveying unit 400 for conveying slag after the carbonation reaction is completed, and a part of the conveying unit may include a washing unit 500 in which a washing reaction using water may be performed.

The slag feeding device 100 is a device that feeds the slag filled in the hopper 101 to an upper portion of the carbonization reactor 200 and may be variously configured with a slag inlet 102, such as a screw type (A) or a conveyor type (B) (FIG. 2). The slag feeding device is used for controlling the amount of slag injected into the upper portion of the carbonization reactor.

The carbonization reactor 200 is a batch type reactor in which the NaHCO₃ solution is injected from an upper portion to a lower portion of the carbonization reactor. Herein, total reaction time can be controlled according to liquid flow rate and NaHCO₃ moves along the surface of slag so that mineral carbonation occurs on the surface of slag. The carbonization reactor may be controlled so that powder is smoothly conveyed using a vibration pad or a striking device.

The absorption tower 301 of the absorption unit 300 is a part for absorbing CO₂ by an acid-base reaction, in which an NaOH solution is introduced from an upper part to the lower part, for example by spraying through a spray nozzle, and gas containing CO₂ moves from the lower part of the absorption tower 301 to an upper part and absorbs CO₂ through gas-liquid contact during this process, thereby discharging CO₂-free exhaust gas.

The conveying unit 400 may react with the NaHCO₃ solution while the slag is being conveyed so that an additional mineral carbonation reaction proceeds to improve a reaction time, and the slag for which the mineral carbonation reaction has been completed may be recovered and utilized from a bucket 30 at the lower end of the conveying unit. Herein, the conveying unit 400 may include a screw type (A) or a conveyor type (B) (FIG. 2).

FIG. 1 is a schematic view showing an exemplary configuration of the CO₂ capture and continuous direct mineral carbonization reactor according to the present disclosure with a batch type reactor 200 in combination with a slag inlet 102 in screw type (A) and conveying unit 400, and FIG. 2 is a view showing a batch type reactor 200 in combination with a slag inlet 102 in a conveyor type (B) and conveying unit 400.

### 2. Process of continuous mineral carbonation based on direct carbonation

In the simulation experiment for the continuous mineral carbonation reaction based on the direct carbonation in the present disclosure, 50 g of steelmaking slag was introduced into a 500 ml Erlenmeyer flask containing either a 1 M solution of NaHCO₃ (100% loading of CO₂), or a mixed solution of NaHCO₃ (0.75 M) and NaOH (0.25 M) (75% loading of CO₂) and the CO₂ absorption amount over time was measured.

As the reaction proceeds, the total inorganic carbon (TIC) in the liquid phase decreases as alkaline earth metals precipitate out of solution into a solid slag. Thus, the amount of CO₂ absorbed by the slag can be calculated as the difference between the initial and final TIC levels. The reaction rate between slag and CO₂ gradually slows down over time, and the endpoint at which no further reaction occurs was regarded as the maximum CO₂ absorption capacity of the slag.

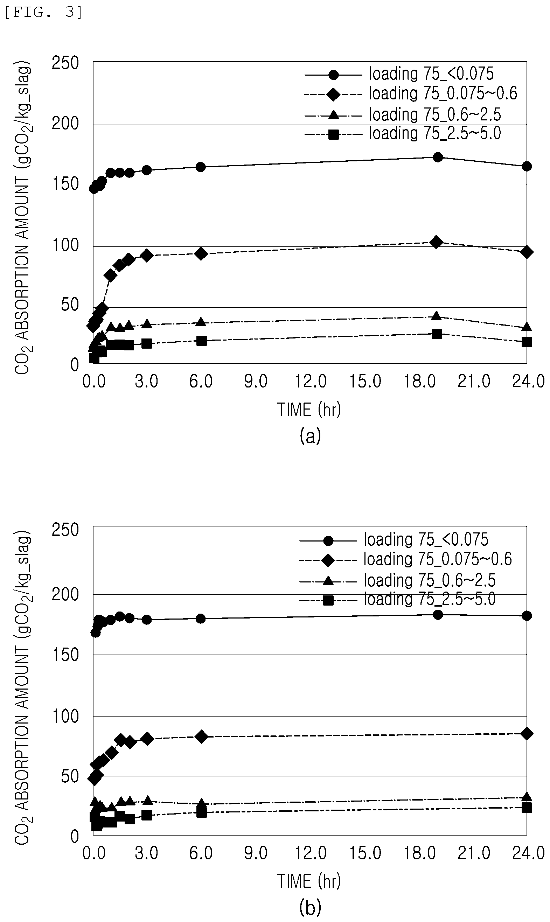

As shown in FIG. 3, the mineral carbonation reaction time of slag can be changed according to particle size/NaHCO₃ concentration, and particularly, it was confirmed that when the particle size is 0.075 mm or less, conversion of 85% or more of mineral carbonation is possible by controlling the reaction rate of steelmaking slag at 3 hours. Therefore, if a continuous direct mineral carbonation apparatus according to the present disclosure is applied, it is judged that the reaction residence time can be secured up to about 3 hours so as to effectively react slag with CO₂. In addition, since the mineral carbonation reaction is performed under countercurrent contact in the carbonization reactor, the residence time can be controlled by adjusting the speed of solid and liquid, and thus, the mineral carbonation reaction can be activated by increasing the contact time.

**[Table 1]**

| Slag type | CO₂ loading (%) | Particle size (mm) | Maximum absorption amount (gCO₂/kg_slag) | Maximum absorption amount (gCO₂/kg_slag) | Conversion rate (%) |
|---|---|---|---|---|---|
| | | | After 3-hour reaction | After 1-day reaction | |
| | 75 | <0.075 | 81.6 | 95.4 | 85.5 |
| | | 0.075~0.6 | 25.3 | 34.5 | 73.3 |
| | | 0.6~2.5 | 8.3 | 15.3 | 54.2 |
| Blast furnace slag | | 2.5~5 | 8.1 | 16.4 | 49.4 |
| | 100 | <0.075 | 70.1 | 78.2 | 89.6 |
| | | 0.075~0.6 | 20.1 | 32.0 | 62.8 |
| | | 0.6~2.5 | 6.4 | 10.6 | 60.4 |
| | | 2.5~5 | 6.5 | 14.2 | 45.8 |

The CO₂ conversion rate and the CO₂ absorption amount in Table 1 were calculated as follows.

### 1) CO₂ conversion rate

CO₂ conversion was measured using a multi NC/3100 analyzer from Analytik jena, and the measurement performed three times using the analyzer, from which three values showing reproducibility of less than 1% were selected.

### 2) CO₂ absorption amount

The CO₂ absorption amount was calculated based on the following Formula (4). $\begin{matrix}{CO}_{2} absorption amount = \\ \frac{\left(TIC before reaction-TIC after reaction\right) \times Dilution factor \left(30\right) \times \left(\frac{{CO}_{2} molecular weight \left(44\frac{g}{mol}\right)}{{CO}_{2} molecular weight \left(12\frac{g}{mol}\right)}\right)}{1 , 000} \\ \times \frac{Solution amount \left(ml\right)}{Solute quantity \left(g\right)}\end{matrix}$ Formula (4)

### 3. Check for change in pH and CO₂ absorption rate (%) over time during a continuous mineral carbonation reaction based on the direct carbonation

### (1) Continuous mineral carbonation based on direct carbonation using blast furnace slag

50 g of slag was injected into an aqueous solution of 0.75 mol of NaHCO₃ (H₂O base), and the change in pH and CO₂ absorption rate (%) over time were measured. Herein, the percentage absorption of CO₂ was calculated by Formula (5) below. ${CO}_{2} absorption rate \left(%\right) = \left(1-\frac{{CO}_{2} amount before reaction}{amount of increase in {CO}_{2} after the reaction}\right) ∗ 100$ Formula (5)

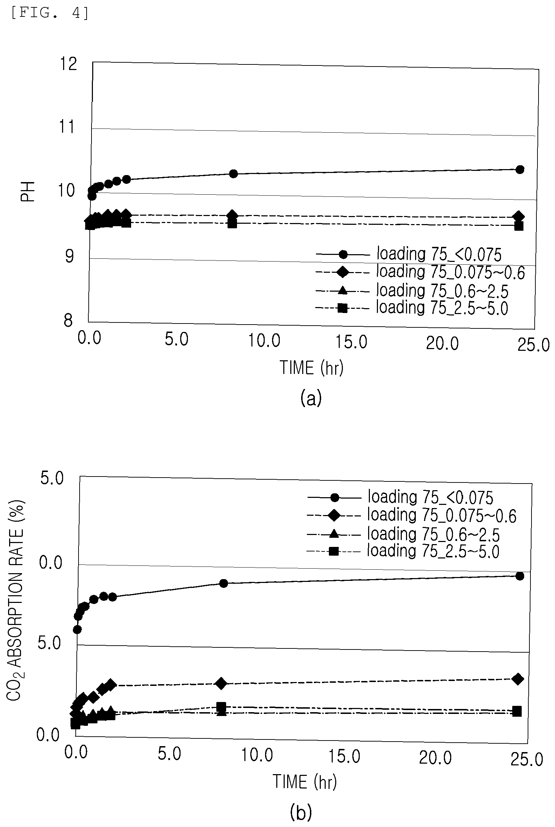

As a result, it was confirmed that the pH in the liquid phase increased as shown in FIG. 4(a) because OH⁻ was generated as the - reactions according to the Reaction Equation (1) and (2) proceeded.

NaHCO₃ → Na⁺ + HCO₃⁻ Reaction Equation (1)

CaO + HCO₃¯ → CaCO₃ + OH⁻ Reaction Equation (2)

In addition, as shown in FIG. 4 (b), the absorption capacity of CO₂, that is, the increase in absorption rate gradually decreases as the reaction proceeds and reaches a section where no more reaction occurs. Therefore, according to an embodiment of the present disclosure, the reaction time may be performed within five hours, for example, within three hours or two hours.

### (2) Continuous mineral carbonation based on direct carbonation using KR slag

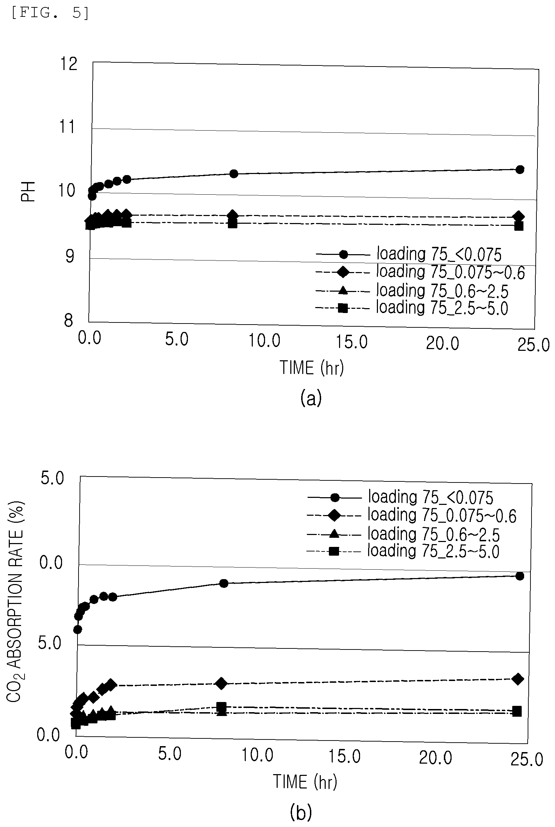

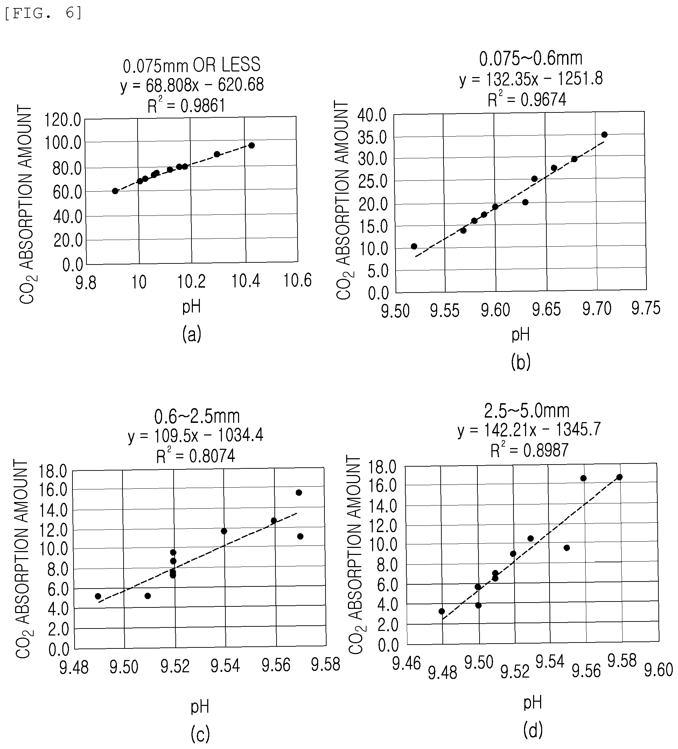

The same process as in the above-described (1) was performed except that slag was replaced with a hot metal pretreatment slag (KR slag), and pH change and CO₂ absorption rate (%) over time were measured, and shown in FIG. 5, and based on the difference in particle size the CO₂ absorption amount (gCO₂/kg_slag) according to the pH change was presented as a graph in FIG. 6.

### Description of Reference Characters

| | | | |
|---|---|---|---|
| 10: | Flow Meter | 20: | Pump |
| 30: | Slag Bucket | 40: | H₂O Tank |
| 100: | Slag Feeding Device | | |
| 101: | Hopper | 102: | Slag Inlet |
| 110: | Gas Inlet | 120: | Gas Outlet |
| 200: | Carbonization Reactor | | |
| 300: | Absorption Unit | | |
| 301: | Absorption Tower | 302: | Demister |
| 303: | Spray Nozzle | 304: | Line Mixer |
| 305: | Mass Flow Controller (MFC) | | |

| | | | |
|---|---|---|---|
| 400: | Conveying Unit | | |
| 500: | Washing Unit | | |
| (A): | Screw Type | | |
| (B): | Conveyor Type | | |

## Claims

1. An apparatus for continuous mineral carbonation comprising:
an absorption tower that absorbs CO₂ from a CO₂-containing exhaust gas by means of an alkaline absorbent solution, discharges purified exhaust gas, and discharges a CO₂-containing absorbent solution;
a slag feeding device that feeds industrial by-products containing calcium oxide (CaO) into a carbonization reactor;
the carbonization reactor in which a carbonation reaction occurs between the CO₂-containing absorbent solution discharged from the absorption tower and the industrial by-products containing calcium oxide (CaO); and
a conveying unit that continuously conveys, to a storage unit, a mixture discharged from the carbonization reactor.

2. The apparatus for continuous mineral carbonation of claim 1, wherein the alkaline absorbent solution is at least one selected from a group consisting of sodium hydroxide (NaOH), potassium hydroxide (KOH), sodium carbonate (Na₂CO₃) and potassium carbonate (K₂CO₃).

3. The apparatus for continuous mineral carbonation of claim 1, wherein the alkaline absorbent solution is an aqueous sodium hydroxide (NaOH) solution and the CO₂-containing absorbent solution is an aqueous sodium bicarbonate (NaHCO₃) solution.

4. The apparatus for continuous mineral carbonation of claim 1, wherein the industrial by-product comprising calcium oxide is at least one selected from a group consisting of: at least one slag selected from the group consisting of steelmaking slag, blast furnace slag, and hot metal pretreatment slag; coal ash; fly ash; cement kiln dust; and chlorine bypass system dust.

5. The apparatus for continuous mineral carbonation of claim 1, wherein the industrial by-product comprising calcium oxide has a particle size greater than 0.001 mm and less than or equal to 0.6 mm, or less than or equal to 0.075 mm.

6. The apparatus for continuous mineral carbonation of claim 1, wherein the slag feeding device comprises a hopper including an accommodation space for accommodating industrial by-products including calcium oxide and a slag inlet provided at a lower end of the hopper to continuously feed the industrial by-products including calcium oxide discharged from the hopper into the carbonization reactor.

7. The apparatus for continuous mineral carbonation of claim 6, wherein the slag inlet continuously feeds industrial by-products including calcium oxide to the carbonization reactor through a screw type or conveyor type.

8. The apparatus for continuous mineral carbonation of claim 1, wherein the conveying unit conveys a mixture continuously discharged from the carbonization reactor to the storage unit by a screw type or conveyor type.

9. The apparatus for continuous mineral carbonation of claim 1, further comprising a washing unit for washing the mixture discharged from the carbonization reactor carried by the conveying unit.

10. A method for continuous mineral carbonation using the apparatus of any one of claims 1 to 9, comprising the steps of:
absorbing CO₂ from CO₂-containing exhaust gas using an alkaline absorbent solution to discharge purified exhaust gas and preparing a CO₂-containing absorbent solution;
performing a carbonation reaction by mixing the CO₂-containing absorbent solution with industrial by-products including calcium oxide (CaO); and
continuously conveying and storing a mixture discharged as a result of the carbonation reaction.
